# EUROPÄISCHE PATENTSCHRIFT

(11) **EP 0 814 306 B1**
(45) Veröffentlichungstag und Bekanntmachung des Hinweises auf die Patenterteilung: **02.05.2003**
(21) Anmeldenummer: 97109466.9
(22) Anmeldetag: 11.06.1997
(51) Int. Cl.: F24D 12/02, F24H 1/10

(54) **Verfahren und Vorrichtung zur Nutzung der restlichen fühlbaren und der latenten Wärme (Restwärme) eines Abgases einer Feuerungsanlage**
Method and apparatus for recovering the remaining sensible and latent heat from the fumes of a furnace
Méthode et appareil pour récupérer la chaleur résiduaire sensible et latente dans les fumées d'un foyer

(30) Priorität: 20.06.1996 DE 19624520
(43) Veröffentlichungstag der Anmeldung: 29.12.1997
(73) Patentinhaber: Deutsches Zentrum für Luft- und Raumfahrt e.V., 51147 Köln (DE)
(72) Erfinder: Farago, Zoltan, 74747 Merchingen (DE); Adis, Erich, 74239 Hardthausen (DE)
(74) Vertreter: Hoeger, Stellrecht & Partner

(56) Entgegenhaltungen:
- EP-A- 0 775 873
- DE-A- 2 512 233
- DE-A- 3 344 089
- DE-A- 4 436 412
- US-A- 4 403 572
- US-A- 4 848 277

## Beschreibung

Die vorliegende Erfindung betrifft ein Verfahren zur Nutzung der restlichen fühlbaren und der latenten Wärme (Restwärme) eines Abgases einer Feuerungsanlage, bei dem das Abgas durch einen Restwärmetauscher strömt und im Abgas enthaltener Wasserdampf in dem Restwärmetauscher zumindest teilweise zu einem Kondensat kondensiert und das Kondensat als Kühlmedium für das Abgas in einem den Restwärmetauscher umfassenden Kondensatkreislauf geführt wird, wobei aus dem Kühlmedium durch Wärmetausch Wärme an Heizwasser in einem Heizungsrücklauf abgegeben wird.

Ferner betrifft die vorliegende Erfindung eine Vorrichtung zur Nutzung der restlichen fühlbaren und der latenten Wärme (Restwärme) eines Abgases einer Feuerungsanlage, bei der das Abgas durch einen Restwärmetauscher strömt und im Abgas enthaltener Wasserdampf in dem Restwärmetauscher zumindest teilweise zu einem Kondensat kondensierbar ist und das Kondensat als Kühlmedium für das Abgas in einem den Restwärmetauscher umfassenden Kondensatkreislauf geführt wird, wobei aus dem Kühlmedium durch Wärmetausch Wärme an Heizwasser in einem Heizungsrücklauf überführbar ist.

Solche Verfahren und Vorrichtungen sind aus dem Stand der Technik bekannt.

Insbesondere Ist es bekannt, die Restwärme eines Abgases einer Feuerungsanlage bei Kesselauslastungen beispielsweise größer als 20 % auszunutzen. Jedoch haben diese Verfahren den Nachteil, daß bei kleinerer Kesselauslastung (beispielsweise unter 20 %) der Wirkungsgrad der mit diesen Verfahren betriebenen Anlagen stark abfällt.

Ein weiterer Nachteil dieser bekannten Verfahren ist, daß sich die Restwärme in einer mit Erdgas oder mit Heizöl betriebenen Feuerungsanlage nur eingeschränkt nutzen läßt. Das Abgas einer Ölheizung weist eine Abgastaupunkttemperatur von ca. 50°C auf, die unterhalb der Abgastaupunkttemperatur von etwa 55°C von Gasheizungen liegt. Es entsteht die Gefahr, daß durch den im Abgas einer Ölfeuerung enthaltenen Brennstoffschwefel das Kondensat Im Kondensatkreislauf versauern oder versalzen kann, wenn In längeren Betriebsphasen die Restwärme des Abgases nicht genutzt wird, so daß kein zusätzliches Kondensat gebildet wird.

Aus der DE-A-25 12 233 ist ein Verfahren zur Wärmerückgewinnung aus den Rauchgasen brennstoffbehelzter Kessel, In denen Wasser erwärmt wird, bekannt, bei dem mit den aus dem Heizkessel austretenden Rauchgasen ein flüssiges Zwischenmedium aufgeheizt wird und das in den Heizkessel eintretende Wasser durch Wärmeaustausch mit dem Zwischenmedium vorgewärmt wird.

Der vorliegenden Erfindung liegt daher die Aufgabe zugrunde, ein Verfahren und eine Vorrichtung der eingangs genannten Art derart zu verbessern, daß ein gegenüber herkömmlichen Verfahren und Vorrichtungen größerer Anteil der Restwärme des Abgases genutzt werden kann und das Verfahren und die Vorrichtung universell einsetzbar sind.

Diese Aufgabe wird bei dem Verfahren mit den Merkmalen des Oberbegriffes von Anspruch 1 erfindungsgemäß dadurch gelöst, daß die Temperatur des Heizwassers im Heizungsrücklauf so eingestellt wird, daß die Temperatur im Kühlmedium so weit unter einer Abgastaupunkttemperatur des Abgases der Feuerungsanlage liegt, daß ein Großteil des im Abgas enthaltenen Wasserdampfs im Restwärmetauscher kondensiert und daß aus dem Heizungsvorlauf Heizwasser direkt in einen Kesselrücklauf geführt wird.

Das erfindungsgemäße Konzept stellt sicher, daß im Restwärmetauscher ein Großteil des im Abgas enthaltenen Wasserdampfes kondensiert. Dadurch kann die Restwärme bei Kesselauslastungen von annähernd 0 % bis annähernd 100 % genutzt werden. Bei einer Mehrzahl von Tagen einer Heizperiode liegt die mittlere tägliche Kesselauslastung üblicherweise unterhalb von 20 %. Durch das erfindungsgemäße Konzept wird bezogen auf eine gesamte Heizungsperiode eine Wirkungsgradverbesserung erreicht.

Insbesondere bietet das erfindungsgemäße Konzept den Vorteil, daß für Ölfeuerungen die Restwärme in einem großen Bereich von Kesselauslastungen genutzt werden kann, so daß keine Gefahr von Versauerung oder Versalzung des Kondensats besteht. Damit werden Korrosion und Verstopfungen im Kondensatkreislauf vermieden und die Vorrichtung weist neben einem höheren Wirkungsgrad eine längere Lebensdauer und geringere Störungsanfälligkeit auf.

Es ist günstig, wenn aus dem Heizungsvorlauf Heizwasser direkt In einen Kesselrücklauf geführt wird. Dadurch erhöht sich der Rückstrom von Heizwasser in einen Heizwasserkessel und das Heizwasser tritt mit einem größeren Impuls In diesen ein. Dadurch wird vermieden, daß sich in dem Heizwasserkessel eine Temperaturschichtung ausbildet, die zu einer Heizwasserkesselkorrosion führen kann.

Insbesondere ist es vorteilhaft, wenn die Temperatur des Heizwassers im Heizungsrücklauf so eingestellt wird, daß mindestens 50 % und insbesondere mindestens 80 % des im Abgas enthaltenen Wasserdampfs zu Kondensat kondensieren. Dadurch wird eine optimale Nutzung der Restwärme des Abgases gewährleistet.

Um zu erreichen, daß ein Großteil des im Abgas enthaltenen Wasserdampfs im Restwärmetauscher kondensiert, liegt die Temperatur des Heizwassers im Heizungsrücklauf unterhalb von ca. 35°C und insbesondere Im Bereich von etwa 20°C bis 30°C.

Damit ist gewährleistet, daß sich die Restwärme auf einem Temperaturniveau, welches deutlich unter der Abgastaupunkttemperatur des Abgases liegt, verwertet wird.

Es ist vorteilhaft, wenn die Temperatur des Heizwassers im Heizungsrücklauf in Abhängigkeit von der Außentemperatur gesteuert wird. Dadurch wird die Regelung der Vorrichtung vereinfacht, da beispielsweise bei sehr tiefen Außentemperaturen höhere Temperaturen des Heizwassers im Heizungsrücklauf zugelassen werden können.

Die Regelung erfolgt derart, daß die Temperatur von Heizwasser in einem Heizungsvorlauf und ein Massestrom von Heizwasser durch eine Heizkörperanordnung in Abhängigkeit von der Außentemperatur und in Abhängigkeit von der Temperatur des Heizwassers im Heizungsrücklauf so gesteuert werden, daß durch eine Heizkörperanordnung der Heizungsanlage eine vorbestimmte Wärmemenge abgegeben wird. Die Temperatur im Heizungsvorlauf und der Massestrom werden so angepaßt, daß eine optimale Nutzung der Restwärme des Abgases ermöglicht ist.

Es ist vorteilhaft, wenn bei erhöhtem Wärmebedarf eine erhöhte Wärmeabgabe durch die Heizkörperanordnung einstellbar ist. Dadurch kann beispielsweise nach einer Nachtabsenkung der Wärmeabgabe die gewünschte Raumtemperatur schneller erreicht werden oder bei erhöhtem Wärmebedarf beispielsweise in Badezimmern und Kinderzimmern läßt sich dies leicht erreichen.

Der Massestrom an Heizwasser, welcher aus dem Heizungsvorlauf direkt In den Kesselrücklauf geführt wird, ist dabei günstigerweise mindestens so groß und höchstens fünffach so groß wie der Massestrom an Heizwasser, der im Heizungsvorlauf der Heizkörperanordnung zugeführt wird. Dadurch ist sichergestellt, daß ein genügend großer Rücklaufstrom In den Heizwasserkessel vorhanden ist. Da bei dem erfindungsgemäßen Verfahren der Heizkörperanordnung ein kleinerer Massestrom an Heizwasser zugeführt wird als bei üblichen und bekannten Verfahren, muß für ein Mischerventil, welches bei dem erfindungsgemäßen Verfahren eingesetzt wird, eine kleinere Abmessung verwendet werden, als sie für Mischerventile bei bekannten Vorrichtungen in Gebrauch ist. Durch die Überführung von Heizwasser aus dem Heizungsvorlauf in den Kesselrücklauf lassen sich jedoch solche Mischerventile verwenden, wie sie üblicherweise eingesetzt werden, ohne daß eine Verschlechterung der Mischercharakteristik eintritt. Dadurch läßt sich das erfindungsgemäße Verfahren auf kostengünstige Weise realisieren.

Der Massestrom im Kesselrücklauf wird ebenfalls dadurch erhöht, daß ein Ladekreislauf vorgesehen ist, durch den Heizwasser aus einem Kesselvorlauf dem Kesselrücklauf zugeführt wird, wobei das Heizwasser im Ladekreislauf einen Heizwasser-Brauchwasser-Wärmetauscher, welcher zur Brauchwasserzubereitung dient, durchströmt. Wird kein Brauchwasser entnommen, dann kann über den Ladekreislauf heißes Heizwasser aus dem Kesselvorlauf in den Kesselrücklauf befördert werden, so daß sich der Massedurchsatz durch den Kessel erhöht und die Temperaturschichtung im Kessel verringert wird. Außerdem erhöht sich durch das Wasservolumen im Ladekreislauf die Wärmekapazität der erfindungsgemäßen Vorrichtung, so daß beispielsweise kurzfristige Schwankungen keinen zu starken Einfluß auf die Vorrichtung nehmen.

Günstigerweise wird das Heizwasser im Ladekreislauf durch eine Pumpe befördert. Durch eine den jeweiligen Gegebenheiten angepaßte Steuerung der Pumpe kann der Ladekreislauf optimal genutzt werden. Bei einer Variante des erfindungsgemäßen Verfahrens ist die Betätigung der Pumpe an eine Betätigung eines Brenners der Feuerungsanlage gekoppelt.

Durch das erfindungsgemäße Verfahren läßt sich insbesondere eine Feuerungsanlage für Heizöl betreiben und der Brennwert des Heizöls nutzen.

Um die Restwärme optimal zu nutzen, wird die Temperatur des Heizwassers mittels Temperaturfühler im Heizungsrücklauf überwacht. Bei diesen Temperaturfühlern kann es sich insbesondere um Fernfühler handeln.

Vorteilhafterweise erfolgt die Wärmeabgabe vom Kühlmedium an das Heizwasser im Heizungsrücklauf mittels eines Kühlmedium-Heizwasser-Wärmetauschers, welcher in dem Kondensatkreislauf angeordnet ist. Dadurch wird eine optimale Wärmeübergabe vom Kühlmedium auf das Heizwasser erreicht.

Alternativ dazu kann es vorgesehen sein, daß die Wärmeabgabe vom Kühlmedium an das Heizwasser im Heizungsrücklauf dadurch erfolgt, daß Heizwasser mittels einer Wärmetauschereinheit durch einen Kondensatsumpf des Restwärmetauschers geführt wird. Bei der Wärmetauschereinheit kann es sich beispielsweise um eine Wärmetauscherschlange oder um einen Plattenwärmetauscher handeln.

Vorteilhafterweise ist das Kondensatvolumen im Kondensatkreislauf mindestens größer als ein heizwasseraufnehmendes Volumen eines Heizwasserkessels der Feuerungsanlage. Dadurch weist das Kondensat eine große Wärmekapazität auf und kurzzeitige Schwankungen, die sonst zu einer Störung führen können, werden aufgefangen.

Bei einer Vorrichtung zur Nutzung der restlichen fühlbaren und der latenten Wärme (Restwärme) eines Abgases einer Feuerungsanlage mit den Merkmalen des Oberbegriffes von Anspruch 17 wird die der Erfindung zugrundeliegende Aufgabe dadurch gelöst, daß in einem unteren Bereich von Heizkörpern einer Heizkörperanordnung Temperaturfühler zur Überwachung der Temperatur des Heizwassers im Heizungsrücklauf angeordnet sind.

Das erfindungsgemäße Konzept bietet den Vorteil, daß sich die Vorrichtung mit einer höheren Temperaturspreizung zwischen der Temperatur von Heizwasser im Heizungsrücklauf und von Heizwasser in einem Heizungsvorlauf betreiben läßt, so daß die zur Nutzung der Restwärme des Abgases optimale Temperatur des Heizwassers im Heizungsrücklauf einstellbar ist. Das durch die gegenüber herkömmlichen Vorrichtungen größere

Temperaturspreizung auftretende Problem eines geringeren Massestroms an Heizwasser durch die Vorrichtung, welches insbesondere dazu führen kann, daß in einem Heizwasserkessel der Feuerungsanlage durch Temperaturschichtung verstärkt Korrosion auftreten kann, wird dadurch vermindert, daß der Rückstrom in den Heizwasserkessel durch den Bypass erhöht wird.

Vorteilhafterweise ist im Heizungsvorlauf eine erste Drossel angeordnet und in dem Bypass eine zweite Drossel, wobei erste und zweite Drossel aufeinander abgestimmt sind. Dadurch wird es ermöglicht, daß einer Heizkörperanordnung die optimale Menge an Heizwasser zugeführt wird, um eine vorbestimmte Wärmemenge abzugeben, und daß ein genügend großer Rückstrom von Heizwasser in den Heizwasserkessel vorliegt. Die Temperaturschichtung im Heizwasserkessel wird auch dadurch verringert, daß ein Austritt des Kesselvorlaufs in einen Heizwasserkessel der Feuerungsanlage bezogen auf die Schwerkraftrichtung unterhalb eines Eintritts eines Kesselrücklaufs angeordnet ist. Dadurch kann abgekühltes Heizwasser aus dem Kesselrücklauf sich mit im Heizwasserkessel erwärmtem Heizwasser im Heizwasserkessel vermischen.

Es ist weiter vorteilhaft, wenn im Heizwasserkessel Mittel vorgesehen sind, durch die eine gute Durchmischung von im Heizwasserkessel erwärmtem Heizwasser und aus dem Kesselrücklauf eintretendem Heizwasser erreicht wird. Beispielsweise kann der Kesselrücklauf beim Eintritt in den Heizwasserkessel mit einer Wasserführung versehen sein, die verhindert, daß kaltes Heizwasser im Heizwasserkessel sofort nach unten fällt. Durch eine Anordnung von Öffnungen in der Wasserführung kann dieses kalte Rücklaufwasser im Heizwasserkessel verteilt werden.

Vorteile bietet es, wenn mittels eines Ladekreislaufes Heizwasser aus dem Kesselvorlauf dem Kesselrücklauf zuführbar ist, wobei in dem Ladekreislauf ein Brauchwasser-Helzwasser-Wärmetauscher angeordnet ist. Dadurch wird ebenfalls der Rücklaufstrom in den Heizwasserkessel zur Verminderung einer Temperaturschichtung im Heizwasserkessel erhöht, insbesondere zu den Zeiten, zu denen kein Brauchwasser entnommen wird.

Vorteilhafterweise ist ein Mischer vorgesehen, in den der Kesselvorlauf führt und aus dem der Heizungsvorlauf führt. Dadurch lassen sich die optimalen Massestromverhältnisse einstellen.

In einer Variante einer Ausführungsform ist der Mischer ein Dreiwegemischer, in den eine Abzweigung aus dem Heizungsrücklauf führt.

In einer weiteren Variante einer Ausführungsform ist der Mischer ein Vierwegemischer, In den der Heizungsrücklauf führt und aus dem der Kesselrücklauf führt.

Es ist vorteilhaft, wenn in einem unteren Bereich von Heizkörpern einer Heizkörperanordnung Temperaturfühler zur Überwachung der Temperatur des Heizwassers Im Heizungsrücklauf angeordnet sind. Dadurch läßt sich die optimale Temperatur für das erfindungsgemäße Verfahren gemäß einem der Ansprüche 1 bis 16 im Heizungsrücklauf sicher überwachen. Alternativ dazu kann es vorgesehen sein, daß Temperaturfühler im Heizungsrücklauf angeordnet sind.

In der Zeichnung zeigen:
- Fig. 1: Ein Ausführungsbeispiel einer erfindungsgemäßen Vorrichtung zur Nutzung der restlichen fühlbaren und der latenten Wärme eines Abgases einer Feuerungsanlage;
- Fig. 2: ein Ausführungsbeispiel eines Restwärmetauschers;
- Fig. 3: ein Ausführungsbeispiel für die Anordnung von Kesselrücklauf- und Kesselvorlaufeintritten an einem Heizwasserkessel und
- Fig. 4: eine weitere Variante solch einer Anordnung.

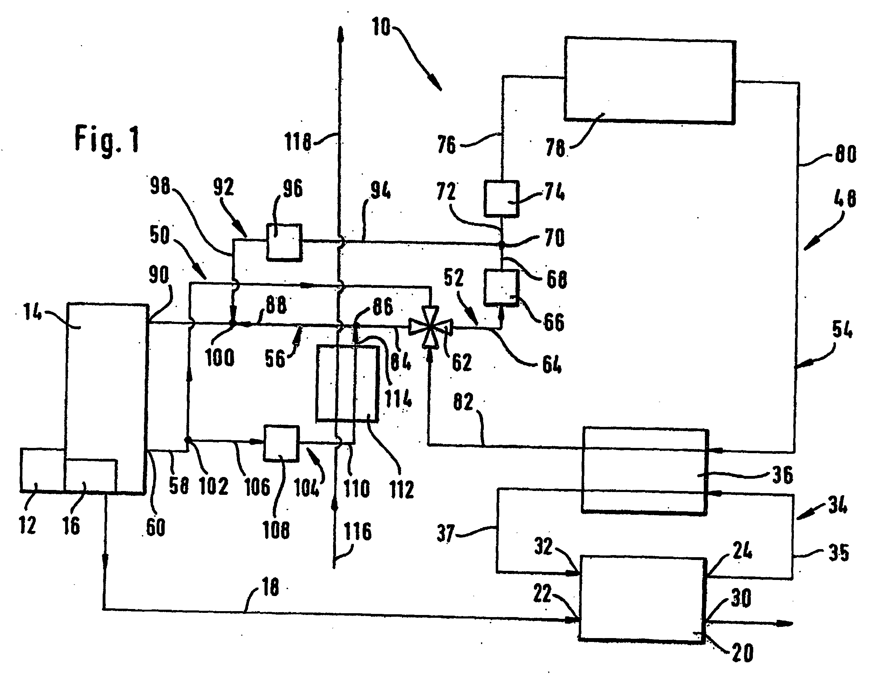

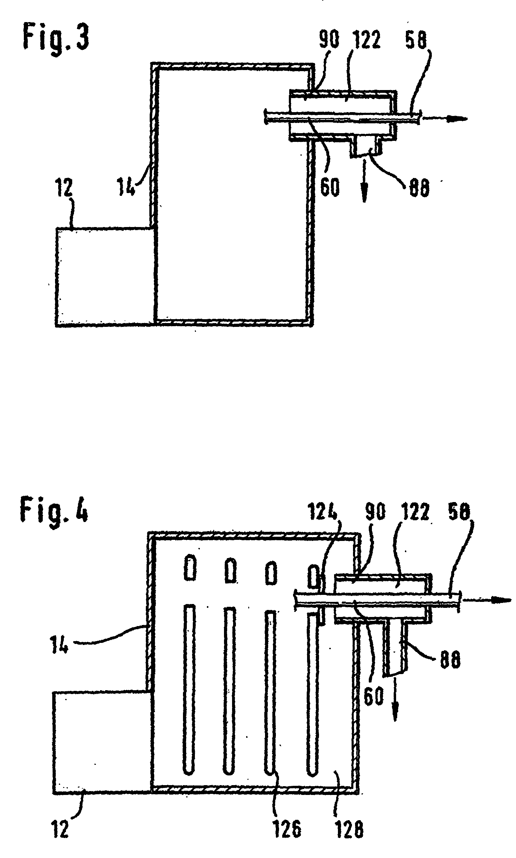

Eine in Fig. 1 insgesamt schematisch dargestellte und als Ganzes mit 10 bezeichnete erste Ausführungsform einer erfindungsgemäßen Vorrichtung zur Nutzung der Restwärme eines Abgases einer Feuerungsanlage umfaßt als Feuerungsanlage einen Brenner 12, der mit einem Heizwasserkessel 14 zur Erhitzung von in letzterem enthaltenem Heizwasser verbunden ist. In einer Variante einer Ausführungsform ist der Heizwasserkessel ein Gliederkessel (Fig. 4).

Der Brenner 12 kann mit beliebigen flüssigen, gasförmigen und festen Brennstoffen, beispielsweise mit Heizöl, Abgas oder Braunkohle, betrieben sein.

Von einem Feuerungsraum 16 des Heizwasserkessels 14 führt eine Abgasleitung 18 zu einem Restwärmetauscher 20. Der Restwärmetauscher 20 weist beispielsweise die Form eines aufrecht stehenden, an Ober- und Unterseite geschlossenen Hohlzylinders auf und ist in seinem unteren Bereich mit einem Abgaseintritt 22, einem Kondensataustritt 24 sowie einem Kondensatüberlauf 26 versehen.

Ferner weist der Restwärmetauscher 20 in seinem oberen Bereich ein Abgasaustritt 30 sowie ein oberhalb desselben angeordneten oberen Kondensateintritt 32 auf.

Der Abgasaustritt 30 ist an ein Schornsteinzuführrohr angeschlossen (in der Fig. nicht dargestellt).

Der Restwärmetauscher 20 ist Bestandteil eines als Ganzes mit 34 bezeichneten Kondensatkreislaufs. Von dem Kondensataustritt 24 des Restwärmetauschers 20 führt eine Leitung 35 zu einem Eingang eines Kühlmedium-Heizwasser-Wärmetauschers 36. An einem Ausgang des Kühlmedium-Heizwasser-Wärmetauschers 36 führt eine Leitung 37 in den Kondensateintritt 32 des Restwärmetauschers 20.

In der Kondensatleitung 35 ist eine Neutralisatorvorrichtung (in der Fig. nicht gezeigt) angeordnet, welche der Neutralisierung saurer Kondensatkomponenten dient. Eine Kondensatpumpe (in der Fig. ebenfalls nicht gezeigt) dient der Erzeugung einer kontinuierlichen Kondensatströmung durch den Kondensatkreislauf 34.

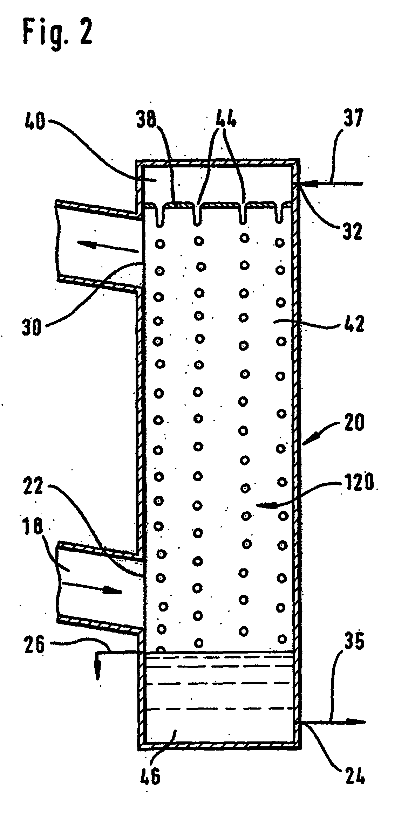

In einer Variante einer Ausführungsform ist der Restwärmetauscher 20 ein Monodispers-Kondensatspray-Wärmetauscher, der in Fig. 2 schematisch dargestellt ist. Der Monodispers-Kondensatspray-Wärmetauscher 20 umfaßt eine horizontal angeordnete zylindrische Düsenplatte 38, die den zylindrischen Innenraum des Kondensatspray-Wärmetauschers 20 in eine oberhalb der Düsenplatte 38 angeordnete Düsenvorkammer 40 und einen unterhalb der Düsenplatte 38 angeordneten Wärmetauscherraum 42 teilt.

Die Düsenplatte 38 wird in vertikaler Richtung von mehreren Düsenbohrungen 44 durchsetzt.

Die Mittelachsen einander benachbarter Düsenbohrungen 44 weisen einen Abstand von einander auf, der vorzugsweise dem fünfzehn- bis zwanzigfachen des Durchmessers der Auslaßöffnung einer Düsenbohrung 44 entspricht.

Die Kondensatleitung 37 mündet oberhalb der Düsenplatte 38 durch die Seitenwand des Restwärmetauschers 20 an dem oberen Kondensateintritt 32 in die Düsenvorkammer 40.

Im unteren Bereich des Restwärmetauschers 20 mündet der Kondensatüberlauf 26 durch eine Seitenwand des Restwärmetauschers in den Wärmetauscherraum 42. Der Raum vom Boden des Wärmetauscherraums 42 bis zur Höhe der Mündungsöffnung des Kondensatüberlaufs 26 ist mit Kondensat gefüllt, das einen Kondensatsumpf 46 bildet.

In diesem Kondensatsumpf 46 mündet nahe des Bodens des Wärmetauscherraums 42 die Kondensatleitung 36 durch die Seitenwand des Restwärmetauschers 20 an dem Kondensataustritt 24.

Die erfindungsgemäße Vorrichtung umfaßt, wie in Fig. 1 gezeigt, einen als Ganzes mit 48 bezeichneten Heizwasserkreislauf. Der Heizwasserkreislauf 48 umfaßt einen Kesselvorlauf 50, einen Heizungsvorlauf 52, einen Heizungsrücklauf 54 und einen Kesselrücklauf 56.

Der Kesselvorlauf 50 ist durch eine Leitung 58 gebildet, welche von einem Austritt 60 für Heizwasser aus dem Heizwasserkessel 14 zu einem ersten Eingang eines Vierwegemischers 62 führt. Der Austritt 60 ist dabei bevorzugterweise in einem unteren Bereich des Heizwasserkessels 14 angeordnet.

Von einem ersten Ausgang des Vierwegemischers 62 führt eine Leitung 64 des Heizungsvorlaufs 52 zu einem Eingang einer Pumpe 66, durch welche Heizwasser im Heizungsvorlauf 52 befördert wird. Von einem Ausgang der Pumpe 66 führt eine Leitung 68 zu einer Abzweigung 70 und von der Abzweigung 70 führt eine Leitung 72 zu einem Eingang einer Drossel 74. Von einem Ausgang der Drossel 74 führt eine Leitung 76 zu einer Heizkörperanordnung 78, durch welche Wärme beispielsweise an Innenräume eines Gebäudes abgegeben wird.

Der Heizungsrücklauf 54 umfaßt eine Leitung 80, welche von der Heizkörperanordnung zu einem Eingang des Kühlmedium-Heizwasser-Wärmetauschers 36 führt. Von einem Ausgang dieses Kühlmedium-Heizwasser-Wärmetauschers führt eine Leitung 82 zu einem zweiten Eingang des Vierwegemischers 62.

In einer Variante eines Ausführungsbeispieles ist kein Kühlmedium-Heizwasser-Wärmetauscher 36 vorgesehen. In diesem Falle wird der Heizungsrücklauf 54 mittels einer Wärmetauschereinheit, beispielsweise einer Wärmetauscherschlange oder eines Platten-Wärmetauschers, durch den Kondensatsumpf 46 des Restwärmetauschers 20 geführt, so daß das Heizwasser im Heizungsrücklauf 54 aus dem Kondensatsumpf 46 des Restwärmetauschers 20 direkt Wärme aufnehmen kann und das Heizwasser im Heizungsrücklauf 54 das Kondensat im Restwärmetauscher 20 kühlen kann.

Von einem zweiten Ausgang des Vierwegemischers 62 führt eine Leitung 84 des Kesselrücklaufs 56 zu einer Zusammenführung 86 und von der Zusammenführung 86 führt eine Leitung 88 zu einem Eintritt 90 für Heizwasser in den Heizwasserkessel 14.

Bevorzugterweise ist der Eintritt 90 für Heizwasser in den Heizwasserkessel 14 oberhalb des Austritts 60 für Heizwasser in den Kesselvorlauf 50 angeordnet, so daß im Heizwasserkessel 14 eine gute Durchmischung von über den Eintritt 90 einströmendem kalten Heizwasser und im Kessel befindlichen warmem Heizwasser erreichbar ist.

In einer Variante einer Ausführungsform (Fig. 3) ist der Austritt 60 des Kesselvorlaufs 50 innerhalb des Eintritts 90 des Kesselrücklaufs 54 angeordnet. Die Kesselrücklaufleitung 88 mündet dazu in einer Kesselrücklaufführung 122, innerhalb welcher der Eintritt 90 und der Austritt 60 angeordnet ist. Bevorzugterweise sitzen der Eintritt 90 und der Austritt 60 dann an einem oberen Bereich des Heizwasserkessels 14, so daß durch diese Anordnung eine gute Durchmischung von rücklaufendem Heizwasser und im Heizwasserkessel 14 aufgeheiztem Wasser erreicht wird.

In einer Variante einer Ausführungsform, bei der der Heizwasserkessel ein Gliederkessel ist (Fig. 4), welcher mehrere Glieder 126 umfaßt, ist an einem dem Eintritt 90 für den Kesselrücklauf 54 nächstliegenden Glied eine Sperre 124 angeordnet, die verhindert, daß rücklaufendes Heizwasser in die nachfolgenden Kesselglieder von oben einströmen kann. Dadurch strömt das rücklaufende Heizwasser in einem ersten Kesselglied 128 nach unten und die Temperaturschichtung im gesamten Heizwasserkessel wird verringert.

In einer Variante eines Ausführungsbeispieles ist statt des Vierwegemischers 62 ein Dreiwegemischer vorgesehen (in der Fig. nicht gezeigt). Bei dieser Variante führt die Leitung 82 direkt in die Leitung 84, so daß der Heizungsrücklauf 54 und der Kesselrücklauf 56 einen gemeinsamen Rücklauf bilden. Aus diesem gemeinsamen Rücklauf wird bevorzugterweise vor der Zusammenführung 86 aus einer Abzweigung Heizwasser in einen Eingang des Dreiwegeventils geführt.

Bei der erfindungsgemaßen Vorrichtung ist ein Bypass 92 vorgesehen, mit dem Heizwasser aus dem Heizungsvorlauf 52 direkt in den Kesselrücklauf 56 geführt werden kann. Dazu führt von der Abzweigung 70 eine Leitung 94 zu einem Eingang einer Drossel 96 und von einem Ausgang der Drossel 96 führt eine Leitung 98 zu einer Zusammenführung 100, welche im Kesselrücklauf 56 angeordnet ist.

Durch die Drossel 96 ist der Massestrom von Heizwasser aus dem Heizungsvorlauf 52 in den Kesselrücklauf 56 einstellbar. Bevorzugterweise ist die Drossel 96 mit der Drossel 74 abgestimmt, so daß das Verhältnis der Menge an Heizwasser, die aus dem Heizungsvorlauf 52 der Heizkörperanordnung 78 über die Leitung 76 und die Menge an Heizwasser, die aus der Abzweigung 70 über die Leitung 94 dem Kesselrücklauf 56 zugeführt wird, abgestimmt werden kann.

In einer Variante einer Ausführungsform kann aus einer Abzweigung 102 Heizwasser aus dem Kesselvorlauf 50 dem Kesselrücklauf 56 mittels eines Ladekreislaufes 104 zugeführt werden.

Dazu führt von der Abzweigung 102 eine Leitung 106 zu einem Eingang einer Pumpe 108 und von einem Ausgang der Pumpe 108 eine Leitung 110 zu einem Eingang eines Brauchwasser-Heizwasser-Wärmetauschers 112. Von einem Ausgang dieses Brauchwasser-Heizwasser-Wärmetauschers 112 führt eine Leitung 114 zu der Zusammenführung 86.

Eine Brauchwasserleitung 116, durch die kaltes Brauchwasser dem Brauchwasser-Heizwasser-Wärmetauscher 112 zur Erwärmung zugeführt werden kann, mündet in einen Brauchwassereingang dieses Wärmetauschers und eine Leitung 118 führt von einem Brauchwasserausgang des Brauchwasser-Heizwasser-Wärmetauschers 112 zu einer oder mehreren Entnahmestellen für warmes Brauchwasser. Dabei kann es sich beispielsweise um einen oder mehrere Wasserhähne oder um eine oder mehrere Duschvorrichtungen handeln.

In einer in Fig. 1 nicht gezeigten Variante eines Ausführungsbeispieles sind weitere Einrichtungen zur Brauchwasserzubereitung vorgesehen. Beispielsweise kann die Vorrichtung einen Warmwasserspeicher aufweisen, in dem kaltes Brauchwasser erwärmt wird. Die Erwärmung kann mittels im Heizkessel aufgeheizten Wassers erfolgen. Es kann ebenfalls vorgesehen sein, daß im Brauchwaser-Heizwasser-Wärmetauscher 112 vorgewärmtes Brauchwasser einem Warmbrauchwasserspeicher zugeführt wird, um diesem vorgewärmtes Brauchwasser zur Verfügung zu stellen.

Die Vorrichtung arbeitet wie folgt:

Heizwasser aus dem Heizwasserkessel 14 gelangt durch den Kesselvorlauf 50 zum Mischer 62 und über den Heizungsvorlauf 52 zur Heizkörperanordnung 78. Beim Durchlaufen der Heizkörperanordnung 78 gibt das Heizwasser Wärme ab, so daß eine Temperaturspreizung zwischen dem Heizwasser in dem Heizungsvorlauf 52 und dem Heizungsrücklauf 54 vorliegt. Das Heizwasser, das dann über den Kesselrücklauf 56 in den Heizwasserkessel 14 zurückgeführt wird, bewirkt, daß die Durchschnittstemperatur des Heizwassers im Heizwasserkessel 14 abnimmt. Sinkt die Temperatur unter eine Einschalttemperatur des Brenners 12, dann wird der Brenner 12 in Betrieb genommen, um das Heizwasser im Heizwasserkessel 14 wieder zu erwärmen. Erreicht das Wasser im Heizwasserkessel 14 eine Ausschalttemperatur des Brenners 12, so wird der Brenner 12 wieder abgeschaltet.

Während der Betriebsphasen des Brenners 12 entsteht durch Verbrennung des Brennstoffs (Öl, Kohle, Gas) im Brenner 12 ein Abgas, das durch die Abgasleitung 18 zum Restwärmetauscher 20 strömt.

Zu Beginn jeder Betriebsphase des Brenners 12 wird die Kondensatpumpe im Kondensatkreislauf 34 in Betrieb genommen. Infolgedessen strömt das Kondensat durch die Kondensatleitung 37 und den oberen Kondensateintritt 32 des Restwärmetauschers 20 in die Düsenvorkammer 40 des Restwärmetauschers 20.

Von dort wird das Kondensat unter einem geringen Überdruck durch die Düsenbohrungen 44 in der Düsenplatte 38 in den Wärmetauscherraum 42 gepreßt.

Das dadurch entstehende monodisperse Kondensatspray bietet eine große Wärmetauscherfläche für den Wärmeübergang von dem heißen Abgas des Brenners 12 und eine hohe Wärmeübergangszahl aufgrund der Nutzung der latenten Wärme des im Abgas enthaltenen Wasserdampfs.

Unmittelbar nach Eintritt des heißen Abgases durch den Abgaseintritt 42 in den Restwärmetauscher 20 in den knapp oberhalb des Kondensatsumpfs 46 liegenden Bereich des Wärmetauscherraums 42 kommt das Abgas mit den Tropfen des monodispersen Kondensatsprays 120 (Fig. 2) in Kontakt, verdampft dieses zumindest teilweise und wird dabei rasch abgekühlt. Dabei wandelt sich die fühlbare Abgaswärme in latente Wärme um.

Da durch partielle Verdampfung des Kondensatsprays 120 gebildete Wasserdampfströmung zusammen mit dem abgekühlten Abgas und dem darin bereits enthaltenen Wasserdampf gegen die Fallrichtung des Kondensatsprays 120 im Wärmetauscherraum 42 nach oben, wobei sich das Abgas weiter abkühlt, so daß im oberen, der Düsenplatte 38 benachbarten Bereich des Wärmetauscherraums 42 der im Abgas mitgeführte Wasserdampf an den Tropfen des Kondensatsprays 120 kondensiert, wobei der zirkulierende Kondensatmassestrom die im Dampf enthaltene latente Wärme aufnimmt.

Die Menge des im oberen Bereich des Wärmetauscherraums 42 kondensierten Wasserdampfs ist größer als die Menge des im unteren Bereich des Wärmetauscherraums 42 verdampften Kondensats, so daß im Ergebnis der mit dem Abgas in den Restwärmetauscher 20 gelangte Wasserdampf zumindest teilweise kondensiert und dabei latente Wärme an den Kondensatmassenstrom im Kondensatkreislauf 34 abgibt.

Da das Kondensat demnach fühlbare und latente Wärme aus dem Abgasstrom aufnimmt, wirkt es als Kühlmedium für das Abgas des Brenners 12.

Die im Kondensatsumpf 46 am Boden des Wärmetauscherraums 42 eintreffende Kondensatmenge ist geringfügig größer als die durch die Düsenplatte 38 in den Wärmetauscherraum 42 eintretende Kondensatmenge. Typischerweise entspricht die pro Zeiteinheit im Wärmetauscherraum 42 aus dem Abgas zusätzlich kondensierte Kondensatmenge ungefähr einem Tausendstel bis zu einem Hundertstel der pro Zeiteinheit in dem Wärmetauscherraum 42 durch die Düsenplatte 38 eintretenden Kondensatmenge, deren Masse wiederum vorzugsweise das ungefähr zehn- bis hundertfache der Masse des pro Zeiteinheit in den Wärmetauscherraum 42 eintretenden Abgases beträgt.

Die durchschnittliche Tropfengröße des monodispersen Kondensatsprays 120 ist in Abhängigkeit von der Strömungsgeschwindigkeit des Abgases im Wärmetauscherraum 42 so gewählt, daß die Tropfen nicht durch den Abgasstrom aus dem Wärmetauscherraum 42 durch den Abgasaustritt 30 mitgerissen werden.

Das Abgas wird im Restwärmetauscher 20 nicht nur abgekühlt und getrocknet, sondern auch gereinigt, da im Abgas mitgeführte Schadstoffe im Kondensatstrom gelöst werden. Insbesondere wird bei Verwendung schwefelhaltiger Brennstoffe im Brenner 12 entstehendes SO₂ so aus dem Abgas ausgewaschen.

Damit die restliche fühlbare und Kondensationswärme aus dem Abgas des Brenners 12 genutzt werden kann, muß das Abgas im Restwärmetauscher unter die Abgastaupunkttemperatur zurückgekühlt werden. Bei Ölheizungen liegt diese Temperatur etwa im Bereich zwischen 45°C und 50°C in Abhängigkeit von der Luftzahl der Verbrennung. Bei Gasheizungen liegt der Abgastaupunkt etwas höher als bei Ölheizungen, typischerweise im Bereich bei etwa 55°C. Die restliche fühlbare Wärme und die Kondensationswärme des Abgases läßt sich desto besser nutzen, desto tiefer die Temperatur im Restwärmetauscher verglichen zum Abgastaupunkt ist.

Aufgrund des Kühlmedium-Heizwasser-Wärmetauschers 36 wird die Temperatur des Kondensats im Kondensatkreislauf 34 und damit die Temperatur im Restwärmetauscher 20 durch die Temperatur des Heizwassers im Heizungsrücklauf 54 bestimmt. Deshalb wird, um eine gute Nutzung der Restwärme des Abgases zu erreichen, die Temperatur des Heizwassers im Heizungsrücklauf 54 auf einen niedrigen Wert eingestellt. Die Temperatur sollte unterhalb von etwa 30°C bis 35°C liegen und insbesondere im Temperaturbereich 20°C bis 30°C liegen, bevorzugterweise bei etwa 25°C.

Eine Variante einer Ausführungsform sieht vor, daß die Temperatur des Heizwassers im Heizungsrücklauf 54 gegenüber einer durch die Heizkörperanordnung 78 erzeugten Raumtemperatur von beispielsweise 20°C etwas erhöht, beispielsweise um 2 bis 3 K, ist.

In einer weiteren Variante ist es vorgesehen, daß die Temperatur des Heizwassers im Heizungsrücklauf in Abhängigkeit von der Außentemperatur gesteuert wird. Bei sehr tiefen Temperaturen weit unter dem Nullpunkt können höhere Rücklauftemperaturen zugelassen werden. Beispielsweise kann bei -20°C Außentemperatur eine befriedigende Nutzung der Restwärme des Abgases noch bei einer Heizwassertemperatur im Heizungsrücklauf 54 von etwa 35°C möglich sein. Bei höheren Außentemperaturen wird dann die Rücklauftemperatur abgesenkt. Insgesamt läßt sich durch die Steuerung der Rücklauftemperatur eine Vereinfachung der Regelung erreichen.

Typischerweise sind moderne Heizungen auf eine Vorlauftemperatur von 55°C und eine Rücklauftemperatur von 45°C ausgelegt. Damit bei Absenkung der Temperatur des Heizwassers im Heizungsrücklauf 54 auf etwa 20°C bis 30°C durch die Heizkörperanordnung 78 noch die gleiche Wärmemenge abgegeben wird, wird bei dem erfindungsgemäßen Verfahren die Temperatur des Heizwassers im Heizungsvorlauf 52 entsprechend erhöht. Damit erhöht sich die Temperaturspreizung zwischen dem Heizwasser im Heizungsvorlauf 52 und dem Heizungsrücklauf 54. Der Massestrom von Heizwasser durch die Heizkörperanordnung 78 wird erniedrigt. Beispielsweise kann bei einer etwa fünffachen Erhöhung der Temperaturspreizung eine gleichzeitige fünffache Reduzierung des Massestroms durch die Heizkörperanordnung 78 zu dem gewünschten Ergebnis führen.

Die Vorlauftemperatur wird dabei in Abhängigkeit von der Außentemperatur gesteuert. Alternativ dazu kann es vorgesehen sein, daß die Temperatur des Heizwassers im Heizungsvorlauf 52 so gesteuert wird, daß die Temperatur des Heizwassers im Heizungsrücklauf 54 auf einen konstanten Sollwert bleibt.

Durch die Reduzierung des Heizwassermassestroms entsteht das Problem, daß im Heizwasserkessel 14 eine Temperaturschichtung entsteht, was zu Kesselkorrosion führen kann. Diese Temperaturschichtung wird vermindert, wenn der Eintritt 90 für den Kesselrücklauf 56 in den Heizwasserkessel 14 oberhalb des Austritts 16 für den Kesselvorlauf 50 angeordnet ist, so daß eintretendes kälteres Heizwasser im Kessel absinken kann und eine bessere Durchmischung erreicht ist.

Der Massestrom in dem Kesselrücklauf 56 wird weiter dadurch erhöht, daß aus dem Kesselvorlauf 52 Heizwasser über den Bypass 92 direkt in.den Kesselrücklauf 56 eingeführt wird. Dadurch tritt eine Erhöhung des Heizwasserrückstroms in den Heizwasserkessel 14 auf, was zu einer Reduzierung der Temperaturschichtung im Heizkessel führt. In einer günstigen Variante des erfindungsgemäßen Verfahrens ist der Bypass-Strom im Bypass 92, welcher mittels der Drossel 96 eingestellt wird, mindestens so groß und höchstens fünffach so groß wie der Massestrom von Heizwasser im Heizungsvorlauf 52, welcher durch die Drossel 74 eingestellt wird.

Weiterhin ist es günstig, wenn aus dem Kesselvorlauf 50 heißes Heizwasser mittels des Ladekreislaufes 104 dem Kesselrücklauf 56 zugeführt wird. Der Ladekreislauf wird dabei durch die Pumpe 108 aufrechterhalten. Die Pumpe wird bei Bedarf eingeschaltet, beispielsweise dann, wenn der Brenner eingeschaltet wird. Die Pumpe wird dann, wobei eine bestimmte Nachlauf zeit berücksichtigt wird, nach Abschalten des Brenners 12 wieder ausgeschaltet. Die Pumpe 108 kann auch eingeschaltet werden, wenn Brauchwasser, welches in dem Brauchwasser-Heizwasser-Wärmetauscher 112 erwärmt wird, entnommen wird.

Zur Erzielung einer guten Arbeitsweise der Vorrichtung ist es vorteilhaft, wenn Temperaturschwankungen des Heizwassers in dem Heizwasserkessel 14 nicht zu Schwankungen der Temperatur des Kondensats im Kondensatkreislauf 34 führen. Dazu weist der Kühlmedium-Heizwasser-Wärmetauscher 36 ein Kondensatvolumen auf, das mindestens größer ist als ein heizwasseraufnehmendes Volumen des Heizwasserkessels 14, und insbesondere etwa dreifach bis fünffach größer ist als dieses Volumen des Heizwasserkessels 14.

In der Variante einer Ausführungsform, bei der der Heizungsrücklauf 54 durch den Kondensatsumpf 46 des Restwärmetauschers 20 geführt ist, ist das Volumen der Kondensatmenge im Kondensatsumpf mindestens größer und insbesondere dreifach bis fünffach größer als das heizwasseraufnehmende Volumen des Heizwasserkessels 14.

Die Rücklauftemperatur wird durch Temperaturfühler an einem unteren Teil von Heizkörpern der Heizkörperanordnung 78 oder durch Temperaturfühler in der Rücklaufleitung 80 (in der Fig. nicht gezeigt) überwacht. Durch diese genaue Überwachung wird erreicht, daß der Massestrom im Heizungsvorlauf 52 so groß ist, daß die Temperatur des Heizwasser im Heizungsrücklauf 54 so groß ist, daß sichergestellt ist, daß eine hohe Kondensationsrate in dem durch den Restwärmetauscher 20 strömenden Abgas erreicht ist und somit Restwärme in hohem Maße genutzt wird.

Eine Nachtabsenkung der Wärmeabgabe der Heizköperanordnung 78 kann dadurch erreicht werden, daß die Leistung der Pumpe 66 im Heizungsvorlauf 52 während der Absenkungszeit reduziert wird. Dadurch wird der Massestrom durch die Heizkörperanordnung 78 reduziert, so daß die dort abgegebene Wärmemenge sinkt. Bei Beendigung der Nachtabsenkung wird die Pumpe 66 abgeschaltet, bis eine erhöhte Temperatur des Heizwassers im Heizwasserkessel 14 erreicht ist. Die Pumpe 66 wird für die Zeit des Wärmenachholbedarfes bei Beendigung der Nachtabsenkung auf eine gegenüber dem stationären Betrieb reduzierte Fördermenge eingestellt und die Temperatur des Heizwassers im Heizungsvorlauf auf einen höheren Wert als im stationären Betrieb erforderlich. Insgesamt wird dadurch vermieden, daß die Temperatur des Heizwassers im Heizungsrücklauf 54 zu stark ansteigt, wenn bei Beendigung der Nachtabsenkung ein erhöhter Wärmebedarf durch die Heizkörperanordnung 78 besteht.

## Patentansprüche

1. Verfahren zur Nutzung der restlichen fühlbaren und der latenten Wärme (Restwärme) eines Abgases einer Feuerungsanlage, bei dem das Abgas durch einen Restwärmetauscher strömt und Im Abgas enthaltener Wasserdampf in dem Restwärmetauscher zumindest teilweise zu einem Kondensat kondensiert und das Kondensat als Kühlmedium für das Abgas in einem den Restwärmetauscher umfassenden Kondensatkreislauf geführt wird, wobei aus dem Kühlmedium durch Wärmetausch Wärme an Heizwasser in einen Heizungsrücklauf abgegeben wird,
**dadurch gekennzeichnet, daß** die Temperatur des Heizwassers im Heizungsrücklauf so eingestellt wird, daß die Temperatur im Kühlmedium so weit unter einer Abgastaupunkttemperatur des Abgases der Feuerungsanlage liegt, daß ein Großteil des im Abgas enthaltenen Wasserdampfs im Restwärmetauscher kondensiert und daß aus dem Heizungsvorlauf Heizwasser direkt in einen Kesselrücklauf geführt wird.

2. Verfahren nach Anspruch 1, **dadurch gekennzeichnet, daß** die Temperatur des Heizwassers im Heizungsrücklauf so eingestellt wird, daß mindestens 50 % und insbesondere mindestens 80 % des im Abgas enthaltenen Wasserdampfs zu Kondensat kondensieren.

3. Verfahren nach Anspruch 1 oder 2, **dadurch gekennzeichnet, daß** die Temperatur des Heizwassers im Heizungsrücklauf unterhalb von ca. 35°C liegt und insbesondere im Bereich von ca. 20°C bis 30°C liegt.

4. Verfahren nach einem der vorangehenden Ansprüche, **dadurch gekennzeichnet, daß** die Temperatur des Heizwassers im Heizungsrücklauf in Abhängigkeit von der Außentemperatur gesteuert wird.

5. Verfahren nach einem der vorangehenden Ansprüche, **dadurch gekennzeichnet, daß** die Temperatur von Heizwasser in einem Heizungsvorlauf und ein Massestrom von Heizwasser durch eine Heizkörperanordnung in Abhängigkeit von der Außentemperatur und in Abhängigkeit von der Temperatur des Heizwassers Im Heizungsrücklauf so gesteuert werden, daß durch eine Heizkörperanordnung eine vorbestimmte Wärmemenge abgegeben wird.

6. Verfahren nach Anspruch 5, **dadurch gekennzeichnet, daß** bei erhöhtem Wärmebedarf eine erhöhte Wärmeabgabe durch die Heizkörperanordnung einstellbar ist.

7. Verfahren nach einem der vorangehenden Ansprüche, **dadurch gekennzeichnet, daß** der Massestrom an Heizwasser, welcher aus dem Heizungsvorlauf direkt in den Kesselrücklauf geführt wird, mindestens so groß ist wie der Massestrom von Heizwasser, der im Heizungsvorlauf der Heizkörperanordnung zugeführt wird.

8. Verfahren nach einem der vorangehenden, **dadurch gekennzeichnet, daß** der Massestrom an Heizwasser, welcher aus dem Heizungsvorlauf direkt in den Kesselrücklauf geführt wird, höchstens fünffach so groß ist wie der Massestrom an Heizwasser, der im Heizungsvorlauf der Heizkörperanordnung zugeführt wird.

9. Verfahren nach einem der vorangehenden Ansprüche, **dadurch gekennzeichnet, daß** ein Ladekreislauf vorgesehen ist, durch den Heizwasser aus einem Kesselvorlauf dem Kesselrücklauf zugeführt wird, wobei das Heizwasser im Ladekreislauf einem Heizwasser-Brauchwasser-Wärmetauscher, welcher zur Brauchwasserzubereitung dient, durchströmt.

10. Verfahren nach Anspruch 9, **dadurch gekennzeichnet, daß** das Heizwasser im Ladekreislauf durch eine Pumpe befördert wird.

11. Verfahren nach Anspruch 10, **dadurch gekennzeichnet, daß** die Betätigung der Pumpe an eine Betätigung eines Brenners der Feuerungsanlage gekoppelt ist.

12. Verfahren nach einem der vorangehenden Ansprüche, **dadurch gekennzeichnet, daß** die Feuerungsanlage mit Heizöl betrieben wird.

13. Verfahren nach einem der vorangehenden Ansprüche, **dadurch gekennzeichnet, daß** die Temperatur des Heizwassers mittels Temperaturfühlern im Heizungsrücklauf überwacht wird.

14. Verfahren nach einem der vorangehenden Ansprüche, **dadurch gekennzeichnet, daß** die Wärmeabgabe vom Kühlmedium an das Heizwasser im Heizungsrücklauf mittels eines Kühlmedium-Heizwasser-Wärmetauschers erfolgt, welcher in dem Kondensatkreislauf angeordnet ist.

15. Verfahren nach einem der Ansprüche 1 bis 13, **dadurch gekennzeichnet, daß** die Wärmeabgabe vom Kühlmedium an das Heizwasser im Heizungsrücklauf dadurch erfolgt, daß Heizwasser mittels einer Wärmetauschereinheit durch einen Kondensatsumpf des Restwärmetauschers geführt wird.

16. Verfahren nach einem der vorangehenden Ansprüche, **dadurch gekennzeichnet, daß** das Kondensatvolumen im Kondensatkreislauf mindestens größer ist als ein heizwasseraufnehmendes Volumen eines Heizwasserkessels der Feuerungsanlage.

17. Vorrichtung zur Nutzung der restlichen fühlbaren und der latenten Wärme (Restwärme) eines Abgases einer Feuerungsanlage, bei der das Abgas durch einen Restwärmetauscher (20) strömt und im Abgas enthaltener Wasserdampf in dem Restwärmetauscher (20) zumindest teilweise zu einem Kondensat kondensierbar ist und das Kondensat als Kühlmedium für das Abgas in einem den Restwärmetauscher (20) umfassenden Kondensatkreislauf (34) geführt wird, wobei aus dem Kühlmedium durch Wärmetausch Wärme an Heizwasser in einem Heizungsrücklauf (54) überführbar ist und wobei ein Heizwasserkessel (14) zur Erhitzung von Heizwasser vorgesehen ist, **dadurch gekennzeichnet, daß** in einem unteren Bereich von Heizkörpern einer Heizkörperanordnung (78) Temperaturfühler zur Überwachung der Temperatur des Heizwassers im Heizungsrücklauf (54) angeordnet sind, um zu überwachen, daß die Temperatur des Heizwassers im Heizungsrücklauf (54) so eingestellt ist, daß die Temperatur im Kühlmedium soweit unter einer Abgastaupunkttemperatur des Abgases der Feuerungsanlage liegt, daß ein Großteil des im Abgas enthaltenen Wasserdampfs im Restwärmetauscher (20) kondensiert, und daß ein Bypass (92) vorgesehen ist, aus dem Heizwasser aus einem Heizungsvorlauf (52) einem Kesselrücklauf (56) zuführbar ist.

18. Vorrichtung nach Anspruch 17, **dadurch gekennzeichnet, daß** im Heizungsvorlauf (52) eine erste Drossel (74) angeordnet ist und in dem Bypass (92) eine zweite Drossel (96), wobei erste und zweite Drossel aufeinander abstimmbar sind.

19. Vorrichtung nach Anspruch 17 oder 18, **dadurch gekennzeichnet, daß** ein Austritt (60) des Kesselvorlaufs (50) in einem Heizwasserkessel (14) der Feuerungsanlage bezogen auf die Schwerkraftrichtung unterhalb eines Eintritts (90) eines Kesselrücklaufs (56) angeordnet ist.

20. Vorrichtung nach Anspruch 19, **dadurch gekennzeichnet, daß** im Heizwasserkessel (14) Mittel (122;124) vorgesehen sind, durch die eine gute Durchmischung von im Heizwasserkessel (14) erwärmtem Heizwasser und aus dem Kesselrücklauf (56) eintretendem Heizwasser erreicht wird.

21. Vorrichtung nach einem der Ansprüche 17 bis 20, **dadurch gekennzeichnet, daß** mittels eines Ladekreislaufs (104) Heizwasser aus dem Kesselvorlauf (50) dem Kesselrücklauf (56) zuführbar ist, wobei in dem Lade-Ladekreislauf (104) ein Brauchwasser-Heizwasser-Wärmetauscher (112) angeordnet ist.

22. Vorrichtung nach einem der Ansprüche 17 bis 21, **dadurch gekennzeichnet, daß** ein Mischer (62) vorgesehen ist, in den der Kesselvorlauf (50) führt und aus dem der Heizungsvorlauf (52) führt.

23. Vorrichtung nach Anspruch 22, **dadurch gekennzeichnet, daß** der Mischer (62) ein Dreiwegemischer ist, in den eine Abzweigung von dem Heizungsrücklauf (54) führt.

24. Vorrichtung nach Anspruch 22, **dadurch gekennzeichnet, daß** der Mischer (62) ein Vierwegemischer ist, in den der Heizungsrücklauf (54) führt und aus dem der Kesselrücklauf (56) führt.

25. Vorrichtung nach einem der Ansprüche 17 bis 24, **dadurch gekennzeichnet, daß** im Heizungsrücklauf (54) Temperaturfühler angeordnet sind.

## Claims

1. Method of utilizing the remaining sensible and the latent heat (residual heat) of a waste gas of a firing system, whereby the waste gas flows through a residual heat exchanger and in the residual heat exchanger water vapour contained in the waste gas condenses at least partially into a condensate and the condensate is fed as a cooling medium for the waste gas in a condensate circuit, which comprises the residual heat exchanger, wherein through heat exchange heat is transferred from the cooling medium to hot water in a heating system return pipe,
**characterized in that** the temperature of the hot water in the heating system return pipe is set in such a way that the temperature in the cooling medium lies so far below a waste-gas point of condensation temperature of the waste gas of the firing system that a large proportion of the water vapour contained in the waste gas condenses in the residual heat exchanger and that hot water is fed from the heating system flow pipe directly into a boiler return pipe.

2. Method according to claim 1, **characterized in that** the temperature of the hot water in the heating system return pipe is set in such a way that at least 50% and, in particular, at least 80% of the water vapour contained in the waste gas condenses into condensate.

3. Method according to claim 1 or 2, **characterized in that** the temperature of the hot water in the heating system return pipe lies below ca. 35°C and, in particular, in the region of ca. 20°C to 30°C.

4. Method according to one of the preceding claims,
**characterized in that** the temperature of the hot water in the heating system return pipe is controlled in dependence upon the outside temperature.

5. Method according to one of the preceding claims,
**characterized in that** the temperature of hot water in a heating system flow pipe and a mass flow of hot water through a heating element arrangement are controlled in dependence upon the outside temperature and in dependence upon the temperature of the hot water. in the heating system return pipe in such a way that a predetermined quantity of heat is output through a heating element arrangement.

6. Method according to claim 5, **characterized in that**, given an increased heat requirement, an increased heat output through the heating element arrangement is adjustable.

7. Method according to one of the preceding claims,
**characterized in that** the mass flow of hot water fed from the heating system flow pipe directly into the boiler return pipe is at least equal to the mass flow of hot water supplied in the heating system flow pipe to the heating element arrangement.

8. Method according to one of the preceding claims,
**characterized in that** the mass flow of hot water fed from the heating system flow pipe directly into the boiler return pipe is at most five times as great as the mass flow of hot water supplied in the heating system flow pipe to the heating element arrangement.

9. Method according to one of the preceding claims,
**characterized in that** a charging circuit is provided, through which hot water is supplied from a boiler flow pipe to the boiler return pipe, wherein the hot water in the charging circuit flows through a hot-water/service-water heat exchanger, which is used to heat service water.

10. Method according to claim 9, **characterized in that** the hot water is conveyed in the charging circuit by means of a pump.

11. Method according to claim 10, **characterized in that** the actuation of the pump is linked to an actuation of a burner of the firing system.

12. Method according to one of the preceding claims,
**characterized in that** the firing system is operated by fuel oil.

13. Method according to one of the preceding claims,
**characterized in that** the temperature of the hot water is monitored by means of temperature sensors in the heating system return pipe.

14. Method according to one of the preceding claims,
**characterized in that** the transfer of heat from the cooling medium to the hot water in the heating system return pipe is effected by means of a cooling-medium/hot-water heat exchanger, which is disposed in the condensate circuit.

15. Method according to one of claims 1 to 13,
**characterized in that** the transfer of heat from the cooling medium to the hot water in the heating system return pipe is effected **in that** hot water is fed by means of a heat exchanger unit through a condensate sump of the residual heat exchanger.

16. Method according to one of the preceding claims,
**characterized in that** the condensate volume in the condensate circuit is at least greater than a hot-water receiving volume of a hot-water boiler of the firing system.

17. Apparatus for utilizing the remaining sensible and the latent heat (residual heat) of a waste gas of a firing system, in which the waste gas flows through a residual heat exchanger (20) and in the residual heat exchanger (20) water vapour contained in the waster gas is at least partially condensable into a condensate and the condensate is fed as a cooling medium for the waste gas in a condensate circuit (34), which comprises the residual heat exchanger (20), wherein through heat exchange heat is transferable from the cooling medium to hot water in a heating system return pipe (54) and wherein a hot-water boiler (14) is provided for heating hot water, **characterized in that** in a bottom region of heating elements of a heating element arrangement (78) temperature sensors for monitoring the temperature of the hot water in the heating system return pipe (54) are disposed in order to check that the temperature of the hot water in the heating system return pipe (54) is set in such a way that the temperature in the cooling medium lies so far below a waste-gas point of condensation temperature of the waste gas of the firing system that a large proportion of the water vapour contained in the waste gas condenses in the residual heat exchanger (20), and that a bypass (92) is provided, from which hot water is suppliable from a heating system flow pipe (52) to a boiler return pipe (56).

18. Apparatus according to claim 17, **characterized in that** in the heating system flow pipe (52) a first throttle (74) is disposed and in the bypass (92) a second throttle (96) is disposed, wherein first and second throttles are tuneable to one another.

19. Apparatus according to claim 17 or 18, **characterized in that** an outlet (60) of the boiler flow pipe (50) is disposed in a hot-water boiler (14) of the firing system in relation to the direction of gravity below an inlet (90) of a boiler return pipe (56).

20. Apparatus according to claim 19, **characterized in that** provided in the hot-water boiler (14) are means (122; 124) of achieving a thorough intermixing of hot water heated in the hot-water boiler (14) and hot water coming in from the boiler return pipe (56).

21. Apparatus according to one of claims 17 to 20,
**characterized in that** by means of a charging circuit (104) hot water is suppliable from the boiler flow pipe (50) to the boiler return pipe (56), wherein in the charging circuit (104) a service-water/hot-water heat exchanger (112) is disposed.

22. Apparatus according to one of claims 17 to 21,
**characterized in that** a mixer (62) is provided, into which the boiler flow pipe (50) leads and from which the heating system flow pipe (52) extends.

23. Apparatus according to claim 22, **characterized in that** the mixer (62) is a three-way mixer, leading into which is a branch from the heating system return pipe (54).

24. Apparatus according to claim 22, **characterized in that** the mixer (62) is a four-way mixer, into which the heating system return pipe (54) leads and from which the boiler return pipe (56) extends.

25. Apparatus according to one of claims 17 to 24,
**characterized in that** temperature sensors are disposed in the heating system return pipe (54).

## Revendications

1. Procédé de récupération de la chaleur résiduaire sensible et latente (chaleur résiduaire) de filmées d'une chaufferie, dans lequel la fumée s'écoule à travers un échangeur de chaleur résiduaire et la vapeur d'eau contenue dans la fumée est condensée dans l'échangeur de chaleur résiduaire au moins partiellement pour former un condensat, et le condensat est amené en tant que fluide de refroidissement pour la fumée dans un circuit de condensat comprenant l'échangeur de chaleur résiduaire, de la chaleur provenant du fluide de refroidissement par échange de chaleur étant fournie à de l'eau de chauffage dans un circuit de retour de chauffage,
**caractérisé en ce que** la température de l'eau de chauffage dans le circuit de retour de chauffage est réglée de telle sorte que la température dans le fluide de refroidissement est inférieure à une température du point de condensation des fumées de la chaufferie dans une mesure telle qu'une grande partie de la vapeur d'eau contenue dans les fumées est condensée dans l'échangeur de chaleur résiduaire et **en ce que** de l'eau de chauffage provenant du circuit de départ de chauffage est amenée directement dans un circuit de retour de chaudière.

2. Procédé selon la revendication 1, **caractérisé en ce que** la température de l'eau de chauffage dans le circuit de retour de chauffage est réglée de telle sorte qu'au moins 50 % et en particulier au moins 80 % de la vapeur d'eau contenue dans la fumée est condensée pour former un condensat.

3. Procédé selon l'une ou l'autre des revendications 1 et 2, **caractérisé en ce que** la température de l'eau de chauffage dans le circuit de retour de chauffage est inférieure à environ 35°C et en particulier dans la plage entre environ 20°C et 30°C.

4. Procédé selon l'une des revendications précédentes, **caractérisé en ce que** la température de l'eau de chauffage dans le circuit de retour de chauffage est commandée en fonction de la température extérieure.

5. Procédé selon l'une des revendications précédentes, **caractérisé en ce que** la température de l'eau de chauffage dans le circuit de départ de chauffage et un débit massique d'eau de chauffage traversant un agencement de radiateurs sont commandés en fonction de la température extérieure et en fonction de la température de l'eau de chauffage dans le circuit de retour de chauffage, de sorte qu'une quantité de chaleur prédéterminée est dégagée par un agencement de radiateurs.

6. Procédé selon la revendication 5, **caractérisé en ce qu'**en cas de besoin accru en chaleur, on peut régler un dégagement de chaleur accru par l'agencement de radiateurs.

7. Procédé selon l'une des revendications précédentes, **caractérisé en ce que** le débit massique de l'eau de chauffage qui est amené depuis le circuit de départ de chauffage directement dans le circuit de retour de chaudière, est au moins aussi grand que le débit massique de l'eau de chauffage qui est amenée dans le circuit de départ de chauffage à l'agencement de radiateurs.

8. Procédé selon l'une des revendications précédentes, **caractérisé en ce que** le débit massique de l'eau de chauffage qui est amenée depuis le circuit de départ de chauffage directement dans le circuit de retour de chaudière, est au maximum cinq fois plus grand que le débit massique de l'eau de chauffage qui est amenée dans le circuit de départ de chauffage à l'agencement de radiateurs.

9. Procédé selon l'une des revendications précédentes, **caractérisé en ce qu'**il est prévu un circuit de chargement à travers lequel de l'eau de chauffage provenant du circuit de départ de chaudière est amenée au circuit de retour de chaudière, l'eau de chauffage traversant dans le circuit de chargement un échangeur de chaleur eau de chauffage/eau sanitaire qui sert à la production d'eau sanitaire.

10. Procédé selon la revendication 9, **caractérisé en ce que** l'eau chaude dans le circuit de chargement est convoyée par une pompe.

11. Procédé selon la revendication 10, **caractérisé en ce que** l'actionnement de la pompe est accouplé à un actionnement d'un brûleur de la chaufferie.

12. Procédé selon l'une des revendications précédentes, **caractérisé en ce que** la chaufferie fonctionne au fuel.

13. Procédé selon l'une des revendications précédentes, **caractérisé en ce que** la température de l'eau de chauffage est surveillée par des sondes de température dans le circuit de retour de chauffage.

14. Procédé selon l'une des revendications précédentes, **caractérisé en ce que** le dégagement de chaleur depuis le fluide de refroidissement à l'eau de chauffage dans le circuit de retour de chauffage a lieu au moyen d'un échangeur de chaleur fluide de refroidissement/eau de chauffage qui est agencé dans le circuit de condensat.

15. Procédé selon l'une des revendications 1 à 13, **caractérisé en ce que** le dégagement de chaleur depuis le fluide de refroidissement à l'eau de chauffage dans le circuit de retour de chauffage a lieu par le fait que de l'eau de chauffage est guidée à travers une bâche à condensat de l'échangeur de chaleur résiduaire au moyen d'une unité d'échangeur de chaleur.

16. Procédé selon l'une des revendications précédentes, **caractérisé en ce que** le volume de condensat dans le circuit de condensat est au moins supérieur à un volume, recevant de l'eau de chauffage, d'une chaudière d'eau de chauffage de la chaufferie.

17. Dispositif de récupération de la chaleur résiduaire sensible et latente (chaleur résiduaire) de fumées d'une chaufferie, dans lequel la fumée s'écoule à travers un échangeur de chaleur résiduaire (20) et la vapeur d'eau contenue dans la fumée est condensée dans l'échangeur de chaleur résiduaire (20) au moins partiellement pour former un condensat, et le condensat est amené en tant que fluide de refroidissement pour la fumée dans un circuit de condensat (34) comprenant l'échangeur de chaleur résiduaire (20), de la chaleur provenant du fluide de refroidissement par échange de chaleur pouvant être fournie à de l'eau de chauffage dans un circuit de retour de chauffage (54), et une chaudière d'eau de chauffage (14) étant prévue pour chauffer de l'eau de chauffage, **caractérisé en ce que** dans une zone inférieure de radiateurs d'un agencement de radiateurs (78) sont agencées des sondes de température destinées à surveiller la température de l'eau de chauffage dans le circuit de retour de chauffage (54), pour surveiller que la température de l'eau de chauffage dans le circuit de retour de chauffage (54) soit réglée de telle sorte que la température dans le fluide de refroidissement est inférieure à une température du point de condensation des fumées de la chaufferie dans une mesure telle qu'une grande partie de la vapeur d'eau contenue dans les fumées est condensée dans l'échangeur de chaleur résiduaire (20), et **en ce qu'**il est prévu un by-pass (92) hors duquel de l'eau de chauffage peut être amenée depuis un circuit de départ de chauffage (52) vers un circuit de retour de chaudière (56).

18. Dispositif selon la revendication 17, **caractérisé en ce qu'**un premier étranglement (74) est agencé dans le circuit de départ de chauffage (52) et un deuxième étranglement (96) est agencé dans le by-pass (92), le premier étranglement et le deuxième étranglement pouvant être adaptés l'un à l'autre.

19. Dispositif selon l'une ou l'autre des revendications 17 et 18, **caractérisé en ce qu'**une sortie (60) du circuit de départ de chaudière (50) est agencé dans une chaudière d'eau de chauffage (14) de la chaufferie, au-dessous d'une entrée (90) du circuit de retour de chaudière (56) par rapport à la direction de la pesanteur.

20. Dispositif selon la revendication 19, **caractérisé en ce que** dans la chaudière d'eau de chauffage (14) sont prévus des moyens (122 ; 124) qui permettent d'obtenir un bon mélange d'eau de chauffage réchauffée dans la chaudière d'eau de chauffage (14) et d'eau de chauffage entrant en provenance du circuit de retour de chaudière (56).

21. Dispositif selon l'une des revendications 17 à 20, **caractérisé en ce que** de l'eau de chauffage provenant du circuit de départ (50) peut être amenée au moyen d'un circuit de chargement (104) au circuit de retour de chaudière (56), un échangeur de chaleur d'eau sanitaire/eau de chauffage (112) étant agencé dans le circuit de chargement (104).

22. Dispositif selon l'une des revendications 17 à 21, **caractérisé en ce qu'**il est prévu un mélangeur (62) dans lequel mène le circuit de départ de chaudière (50) et hors duquel mène le circuit de départ de chauffage (52).

23. Dispositif selon la revendication 22, **caractérisé en ce que** le mélangeur (62) est un mélangeur à trois voies dans lequel mène une dérivation depuis le circuit de retour de chauffage (54).

24. Dispositif selon la revendication 22, **caractérisé en ce que** le mélangeur (62) est un mélangeur à quatre voies dans lequel mène le circuit de retour de chauffage (54) et hors duquel mène le circuit de retour de chaudière (56).

25. Dispositif selon l'une des revendications 17 à 24, **caractérisé en ce que** des sondes de température sont agencées dans le circuit de retour de chauffage (54).
